# EUROPEAN PATENT SPECIFICATION

(11) **EP 2 125 626 B1**
(45) Date of publication and mention of the grant of the patent: **26.06.2019**
(21) Application number: 08727416.3
(22) Date of filing: 08.01.2008
(51) Int. Cl.: C02F 5/14, C02F 5/12, C02F 103/08, C02F 1/44, C02F 1/04

(54) **METHOD OF INHIBITING SCALE FORMATION AND DEPOSITION IN DESALINATION SYSTEMS**
VERFAHREN ZUR HEMMUNG VON KESSELSTEINBILDUNG UND ABLAGERUNGEN IN ENTSALZUNGSSYSTEMEN
PROCÉDÉ D'INHIBITION DE LA FORMATION DE TARTRE ET DES DÉPÔTS DANS LES SYSTÈMES DE DÉSALINISATION

(30) Priority: 11.01.2007 US 622054
(43) Date of publication of application: 02.12.2009
(60) Divisional application: 14151615.3
(73) Proprietor: Nalco Company, Naperville, IL 60563-1198 (US)
(72) Inventor: DAVE, Bhasker, B., Naperville, Illinois 60565 (US); RAO, Narasimha, M., Naperville, Illinois 60565 (US); YANG, Shunong, Naperville, Illinois 60565 (US); GRATTAN, David, A., Bolingbrook, Illinois 60440 (US); BLOKKER, Peter, NL-1705 LR Heerhugowaard (NL)
(74) Representative: Godemeyer Blum Lenze Patentanwälte Partnerschaft mbB - werkpatent
(86) International application number: PCT/US2008/050492
(87) International publication number: WO 2008/088975

(56) References cited:
- US-A- 4 563 284
- US-A- 4 634 532
- US-A- 4 783 314
- US-A- 4 913 823
- US-A- 5 085 794
- US-A- 5 256 303
- US-B1- 6 572 789

## Description

### TECHNICAL FIELD

This invention relates to methods of preventing scale formation and deposition in desalting processes. More specifically, the invention relates to a method of using a scale-inhibiting composition including oligomeric phosphinosuccinic acid in a desalting process to produce water for drinking, industrial, and agricultural applications. The invention has particular relevance to using a composition including phosphinosuccinic acid oligomer or oligomeric phosphinosuccinic acid adducts in thermal and membrane desalting processes to produce potable water from a saline aqueous source.

### BACKGROUND

Desalting, desalination, or desalinization refers to water treatment processes that remove salts from water. These water treatment processes are typically used to produce potable or drinking water from seawater or brackish water. Commercially available desalting processes may be categorized into major processes and minor processes. Major processes include temperature-driven or thermal processes and pressure-driven or membrane processes. Thermal processes include multi-stage flash distillation, multiple-effect distillation, and vapor compression. Membrane processes include electrodialysis and reverse osmosis. Minor processes include freezing, membrane distillation, and solar humidification.

Scale formation and deposition is a significant problem in equipment used in desalting processes. Scale forms when the concentration of a dissolved mineral exceeds its solubility limit and the mineral precipitates. The temperature, pH, water composition, and residence time, for example, of the thermal desalination process determine the types of scale likely to form and thus the scale control requirement. At lower temperatures (e.g., from about 80°C to about 85°C), calcium carbonate (CaCO₃) scale typically forms. Temperatures from about 90°C to about 95°C generally cause Mg(OH)₂ scale. Typically, calcium sulfate (CaSO₄) is a major contributor to scale formation when seawater or salt water approaches about 115°C or higher. CaSO₄ material forms a hard scale that coats any tubes or surfaces present. Scale creates thermal and mechanical problems and is sometimes difficult to remove, especially in the case of CaSO₄ scale. Membrane processes typically have scale formation problems in the reject stream.

A known method of preventing scale formation includes controlling the seawater concentration levels and temperature in thermal desalination processes. Multi-stage flash distillation plants usually operate at temperatures from 90°C to 110°C and operating the process at higher temperatures increases the efficiency, with a concomitant increase in the potential for scale formation and accelerated corrosion of metal surfaces. Chemical scale inhibitors are also used in both thermal and membrane processes. Commercially available examples include Belgard® and Flocon®, from BWA Water Additives, and Sokalan® PM10 and PM15, from BASF-The Chemical Company.

Reverse osmosis end users frequently employ chemical pretreatments, such as the addition of polymeric scale inhibitors/dispersants to inhibit undesirable mineral scaling. In some cases, inorganic inhibitors, such as sodium hexametaphosphate (SHMP), are used. For example, U.S. Pat. No. 4,563,284 discloses a method for inhibiting formation and deposition of scale-forming salts by adding a phosphonocarboxylic acid and a telomeric phosphinocarboxylic acid that contains features of both phosphonates and polyacrylates. U.S. Pat. No. 4,762,621 discloses a scale inhibitor comprising a copolymer of an acrylic acid and a lower alkyl ester of itaconic acid. U.S. Pat. No. 4,784,774 discloses a scale inhibitor containing a homopolymer of maleic acid or a copolymer of a monounsaturated monocarboxylic or dicarboxylic acid or salt thereof containing 3 to 5 carbon atoms and a phosphonoalkane carboxylic acid.

Thus, a major operating problem in seawater distillation plants and reverse osmosis systems is the formation of mineral scales, which reduce heat transfer, plug tubes, and ultimately lower the rated capacity of a plant and increase costs. As industry recognizes the need for new scale inhibitors, there exists a need to develop improved methods of using scale inhibitors.

### SUMMARY

According to the invention, a method of inhibiting scale formation in a desalination process is claimed. The method includes inhibiting formation and deposition of scale in a desalination process by adding to a saline aqueous source an effective amount of a scale-inhibiting composition having an oligomeric phosphinosuccinic acid as defined in claim 1. In one embodiment, the scale-inhibiting composition includes a phosphinosuccinic acid oligomer having formula [R_{X}-(POOM)-R1_{Y}]. R and R1 independently are H, [CH(COOM)], or [CH(COOM)-CH(COOM)]. X and Y are either 0 or a small whole number, the sum of X and Y being greater than 2. M is chosen independently at each occurrence from the group consisting of: H, Na, K, NH₄, the like, or combinations thereof.

In another embodiment, the scale-inhibiting composition includes mono, bis, and oligomeric phosphinosuccinic acid adducts. Preferably, the composition includes 20 mole percent to 85 mole percent bis phosphinosuccinic acid adduct. Most preferably, the composition includes 36 mole percent to 49 mole percent bis phosphinosuccinic acid adducts and 26 mole percent to 35 mole percent oligomeric phosphinosuccinic acid adducts.

In a further embodiment, the scale-inhibiting composition includes less than 22 mole percent monosodium phosphinicobis-succinic acid; less than 26 mole percent monosodium phosphinico-succinic acid; less than 12 mole percent; sodium phosphosuccinic acid; less than 5 mole percent sodium phosphate; less than 6 mole percent sodium phosphate; less than 6 mole percent sodium hypophosphite; and greater than 32 mole percent phosphinosuccinic acid oligomer. In another embodiment, the scale-inhibiting composition includes 40 weight percent maleic anhydride reaction products (including phosphinosuccinic acid oligomers).

It is an advantage of the invention to provide a method of inhibiting scale formation and deposition in commercial desalination processes, such as thermal and membrane desalination processes.

It is another advantage of the invention to provide a method of using an oligomeric phosphinosuccinic acid composition to inhibit scale formation and deposition in commercial desalination processes.

An additional advantage of the invention is to provide a method of inhibiting formation and deposition of scales, such as calcium sulfate, calcium carbonate, magnesium hydroxide, magnesium carbonate, and other scales.

A further advantage of the invention is to provide a scale inhibitor that allows higher operating temperatures of thermal desalination processes to increase recovery and reduce costs.

An additional advantage of the invention is to provide a method of using an oligomeric phosphinosuccinic acid composition to inhibit corrosion in commercial desalination processes.

Additional features and advantages are described herein, and will be apparent from, the following Detailed Description and Examples.

### DETAILED DESCRIPTION

Many different types of commercial desalination or desalting processes or operations exist. This disclosure serves to capture all types of such operations. The methods described herein may be used in any suitable desalination process. Representative commercial desalting processes include thermal processes, such as multi-stage flash distillation, multiple-cffect distillation, and vapor compression, and membrane processes, such as electrodialysis and reverse osmosis. Processes such as freezing, membrane distillation, and solar humidification are also used.

### Scale-Inhibiting Composition

The phosphinosuccinic acid oligomer ("PSO")-based scale inhibitors of the invention can be used alone or in combination with corrosion inhibitors, other scale inhibitors, biocides, dispersants, and any other additives or adjuncts used in commercial desalination processes (described in more detail below). Such combinations, in some embodiments, exert a synergistic effect in terms of corrosion inhibition, scale inhibition, dispersency, and/or microbial growth.

The described composition is effective at any pH. The pH in desalination systems, however, is typically from 6.5 to 9.5 and may be as low as 5 to 6. In one embodiment, the described composition includes a pH-controlling chemical. That is, the composition includes any suitable chemical or compound that is capable of adjusting pH, controlling pH, and/or maintaining pH. Representative pH-controlling chemicals include trisodium phosphate, sodium metaborate, ammonuim carbonate, sodium hydroxide, potassium hydroxide, lithium hydroxide, tetramethylammonium hydroxide, ammonium hydroxide, magnesium hydroxide, magnesium carbonate, sodium silicate, sodium carbonate, the like, and combinations thereof.

In an embodiment, the scale-inhibiting composition of the invention includes a high phosphinosuccinic acid oligomer content, as described in U.S. Pat. No. 5,023,000. In this embodiment, the scale-inhibiting composition includes less than 22 mole percent monosodium phosphinicobis-succinic acid; less than 26 mole percent monosodium phosphinico-succinic acid; less than 12 mole percent sodium phosphosuccinic acid; less than 5 mole percent sodium phosphate; less than 6 mole percent sodium phosphate; less than 6 mole percent sodium hypophosphite; and greater than 32 mole percent phosphinosuccinic acid oligomer of the general formula [R_{X}-(POOM)-R1_{Y}]. R and R1 independently are H, [CH(COOM)], or [CH(COOM)-CH(COOM)]. X and Y arc cither 0 or a small whole number, the sum of X and Y being greater than 2. M is chosen independently at each occurrence from H, Na, K, NH₄, the like, or combinations thereof. A representative synthesis procedure is explained in Example VII below.

In another embodiment, the composition includes a PSO-based scale inhibitor having mono (Formula I) and bis (Formula II) oligomeric phosphinosuccinic acid adducts (as shown below) as well as one or more oligomeric species. While the mono and bis adducts of Formulas I and II are represented below as neutral, organophosphinic acid species, it should be understood that the phosphinic and carboxylic acid groups may also exist in salt form. In alternative embodiments, the mixture may also contain some phosphonosuccinic acid derivatized from the oxidation of adduct Formula I, as well as impurities such as various inorganic phosphorous byproducts of formula (H₂PO₂)⁻, (HPO₃)²⁻, and (PO₄)³⁻.

| | |
|---|---|
| Formula I | 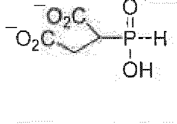 |
| Formula II | 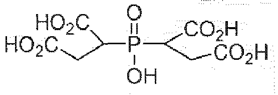 |

Possible structures for the oligomeric species are proposed in U.S. Pat. Nos. 5,085,794, 5,023,000, and 5,018,577. In addition, the oligomeric species may also contain esters of phosphono-succinic acid, where the phosphonate group is esterified with a succinate-derived alkyl group. The mono, bis, and oligomeric components are typically characterized by a group of peaks in the proton decoupled phosphorus NMR spectrum in water at pH 5 as follows: mono: one peak between 26 to 29 ppm; bis: two peaks between 30 to 35 ppm; and oligomer; multiple peaks between 29 to 33 ppm.

In a preferred aspect of the invention, the composition includes from 20 to 85 mole percent, based on phosphorous, of the bis adduct. In an embodiment, the composition includes 36 mole percent to 49 mole percent bis phosphinosuccinic acid adducts and 26 mole percent to 35 mole percent oligomeric phosphinosuccinic acid adducts. The composition is prepared by adding hypophosphite to a maleic acid or fumaric acid slurry or solution in water to create a reaction mixture according to an embodiment. A free radical initiator is then introduced to the reaction mixture to effect a reaction. In the case of a slurry, solids content is not critical as long as the slurry can be mixed. Typically, the slurry has a solids concentration of 35 weight percent to 50 weight percent.

The reaction mixture is optionally heated, preferably at from 40°C to 75°C, followed by addition of hypophosphite to affect conversion to the desired phosphinosuccinic acid adducts in a reasonably short period of time. As used herein, "hypophosphite" means hypophosphorous acid or a salt of hypophosphorous acid, such as sodium hypophosphite. The reaction mixture may be partially or totally neutralized with base in accordance with an embodiment. Aqueous sodium hydroxide is a preferred base, which provides a slurry including maleic and/or fumaric acid salts. Other bases capable of forming salts with fumaric or maleic acid, such as potassium hydroxide and ammonium hydroxide, may also be used. The base may be added before, after, or concurrently with the hypophosphite.

Suitable free radical initiators include persulfates, peroxides and diazo compounds. A preferred initiator is ammonium persulfate. The initiator may be added to the reaction mixture all at once or slowly introduced to the reaction mixture over a period of several hours. The initiator is preferably introduced to the mixture in an amount of between 10 mole percent to 15 mole percent, based on hypophosphite.

In a procedure for preparing phosphinic acid compositions, maleic acid with hypohosphite are used in a 2:1 ratio. The reaction products are predominately mono, bis, and oligomeric phosphinosuccinic acid adducts and inorganic phosphates as described above. In an embodiment, if the reaction is carried out with fumaric acid (*trans* 1,4-butanedioic acid) instead of maleic acid (*cis* 1,4-butanedioic acid) the ratios of mono, bis, and oligomeric phosphinosuccinic acid adducts are altered. This altered composition results in a composition that displays more effective corrosion and scale inhibition properties relative to the composition that is produced when maleic acid is used under the same reaction conditions. In particular, the fumaric acid-based process provides a simple means to increase the amount of bis adduct in the composition and reduce the amount of byproducts in the composition due to a more efficient conversion of hypophosphite and fumaric acid raw materials into the desired phosphinic acids.

The fumaric acid-based process is, in general, very similar to the maleic acid-based process except that fumaric acid is used in place of maleic acid. Preferably, the fumaric acid is produced by isomerization of maleic acid. More preferably, the fumaric acid is prepared by hydrolyzing maleic anhydride in aqueous solution to prepare an aqueous solution of maleic acid, which is then isomerized using heat or a suitable catalyst to form an aqueous solution of fumaric acid. The isomerization can be accomplished thermally only at high temperatures, so a catalyst is usually used to allow the reaction to proceed under relatively mild conditions. Suitable catalysts for the transformation include thiourea and mixtures of oxidants and various bromine compounds. A preferred catalyst is a mixture of a bromide salt with a persulfate salt (*See* U.S. Pat. No. 3,389,173; Ind. Eng. Chem. Res. 1991, 30, 2138-2143; Chem, Eng. Process., 30 (1991), 15-20). Preferably, a mixture of sodium bromide and ammonium persulfate is used to affect this transformation in aqueous media.

In an embodiment, the aqueous fumaric acid solution is then converted to the phosphinic acid-based scale inhibitor of this invention by addition of hypophosphite and a radical initiator to the fumaric acid solution as described above. A preferred ratio of fumaric acid to hypophosphite in the reaction mixture is 1.75:3. Preferably, the initiator is added over a period of several hours while the reaction mixture is heated at 60°C. The reaction is then allowed to proceed until the hypophosphite is almost completely converted to organophosphorous products.

### Method of Application

As mentioned above, it is contemplated that the method of the invention may be employed in any type of desalination, desalting, or similar process. Further, the disclosed method may be employed for inhibiting any type of scale. Representative scales are those including constituents such as calcium, phosphate, magnesium, sulfate, bicarbonate, silicate, carbonate, iron, the like, and combinations thereof. Examples of common scales include calcium sulfate, calcium carbonate, magnesium hydroxide, and magnesium carbonate.

Desalting devices essentially separate an input stream of water having high salt concentration into two output streams, one having a low concentration of dissolved salts (potable, drinking, or fresh water) and the other having concentrated salts (e.g., brine recirculation stream or waste stream). In a preferred embodiment, the method of the invention includes adding an effective amount of the scale-inhibiting composition into the input stream or the brine recirculation stream of such a device. Examples of commercial desalting devices are provided above. In the case of thermal processes, the process may be operated at any suitable temperature. In a preferred embodiment, the thermal process is operated from 80°C to 120°C. In another preferred embodiment, the thermal process is operated from 120°C to 160°C or higher.

It should be understood that the scale-inhibiting composition may be added to the water at any point or stage in the process, preferably to the input stream of seawater or to the recirculation brine. Although not required to implement the method of the invention, it is contemplated that the scale-inhibiting composition may be combined with antifoams, biocides, heat transfer enhancement surfactants, one or more corrosion inhibitors, one or more other scale inhibitors (e.g., polyacrylate, polycarboxylate, or polymaleic acid), one or more fluorescent tracers, one or more water treatment polymers, or any other suitable adjunct or additional component. Any such adjuncts or components may be part of an existing scale-inhibitive program to which the invention becomes an additional component or program. Adjuncts may be part of the scale-inhibiting composition or may be another separate composition or compositions. In alternative embodiments, such components may be added simultaneously or sequentially with the scale-inhibiting composition of the invention.

Exemplary corrosion and other scale inhibitors include tungstate; molybdate; vanadate; phosphate; phosphonate; phosphinate; silicate; borate; zinc and its salts; polycarboxylates, such as polycarboxylic acid; benzoic acid; the like; combinations thereof; or any other suitable corrosion or scale inhibitors. Exemplary water treatment polymers include polyacrylic acid; polymaleic acid; copolymers and terpolymers of acrylic acid, maleic acid, acrylamide, and acrylamidopropyl sulfonate; prism polymers; sulfonate-based polymers; and terpolymers or copolymers of acrylic acid, acrylamide, sulfomethylated acrylamide, the like, and combinations thereof. According to the invention, the scale inhibiting composition includes polymaleic acid added as part of said composition, separately, sequentially, or simultaneously.

The PSO-based scale-inhibiting composition of the invention is added to the saline aqueous source in an amount of from 0.1 ppm to 10,000 ppm, preferably from 0.2 ppm to 100 ppm, and most preferably from 1 ppm to 30 ppm, based on saline aqueous source volume. The saline aqueous source may be any saline source, such as seawater, brackish water, brine, or the like.

In an embodiment, the described composition is added to the system at specified dosages at certain intervals or may be monitored by any analytical chemical means known to those of skill in the art. In alternative embodiments, monitoring the composition dosage and concentration in the system includes using molecules having fluorescent or absorbent moieties (i.e., tracers). Such tracers are typically inert and added to the system in a known proportion to the scale-inhibiting composition. "Inert" as used herein means that an inert tracer (e.g., an inert fluorescent tracer) is not appreciably or significantly affected by any other chemistry in the desalination system, or by other system parameters, such as metallurgical composition, microbiological activity, biocide concentration, heat changes, overall heat content, or other parameters. "Not appreciably or significantly affected" means that an inert fluorescent compound has no more than 10 percent change in its fluorescent signal, under conditions normally encountered in desalination systems.

Representative inert fluorescent tracers suitable for use in the method of the invention include 1,3,6,8-pyrenetetrasulfonic acid, tetrasodium salt (CAS Registry No. 59572-10-0); monosulfonated anthracenes and salts thereof, including, but not limited to 2-anthracenesulfonic acid sodium salt (CAS Registry No. 16106-40-4); disulfonated anthracenes and salts thereof (*See* U.S. Patent Application Ser. No. 10/631,606, filed July 31, 2003, entitled "Use of Disulfonated Anthracenes as Inert Fluorescent Tracers," now pending; fluorescent tracers as listed in U.S. Pat. No. 6,966,213 B2; other suitable fluorescent compounds; and combinations thereof. These inert fluorescent tracers are either commercially available under the tradename TRASAR® from Nalco Company® (Naperville, IL) or may be synthesized using techniques known to persons of ordinary skill in the art of organic chemistry.

Monitoring the concentration of the tracers using light absorbance or fluorescence allows for precise control of the scale-inhibiting composition dosage. For example, the fluorescent signal of the inert fluorescent chemical may be used to determine the concentration of the scale-inhibiting composition or compound in the system. The fluorescent signal of the inert fluorescent chemical is then used to determine whether the desired amount of the scale-inhibiting composition or product is present in the desalination system and the feed of the composition can then be adjusted to ensure that the desired amount of scale-inhibitor is in the system.

### EXAMPLES

The foregoing may be better understood by reference to the following examples, which are intended for illustrative purposes and are not intended to limit the scope of the invention.

### Example I

A 2.1:1 molar ratio of fumaric acid to hypophosphite was used in this Example. Crushed maleic anhydride briquettes, 75.9 parts, were added to 104.4 parts water in a 1 liter resin flask equipped with a mechanical stirrer, condenser, nitrogen inlet, and heater. The anhydride was allowed to hydrolyze at 40°C to produce a maleic acid solution. The reaction was then heated to 60°C and a solution of sodium bromide (0.16 parts dissolved in 0.20 parts water) was added, followed immediately by a solution of ammonium persulfate (0.43 parts dissolved in 1.49 parts water). Within 60 minutes, an exothermic reaction converted the maleic acid solution into 183.6 parts of a 49.2 wt.% slurry of fumaric acid in water, as verified by proton NMR.

Sodium hypophosphite monohydrate (38.9 parts) was added to 182.6 parts of a 49.2 wt.% slurry of fumaric acid in water contained in a 1 liter resin flask having a mechanical stirrer, condenser, nitrogen inlet, and heater. A solution of ammonium persulfate (10.9 g dissolved in 36.9 parts water) was then added over a period of 5 hours while maintaining a reaction temperature of 60°C under a nitrogen blanket. The reaction solution was heated an additional 1 to 5 hours, and then adjusted to pH 6 under external cooling with 96.2 parts of a 50% aqueous solution of sodium hydroxide. Finally, 18 parts water was added.

The product, comprised of salts hypophosphite/fumarate adducts described in Table I below, displayed the following molar distribution of components, determined by phosphorous NMR analysis. The first dataset represents the average of four reactions run at 400 to 600 g scale according to the procedure described above. The second set of data represents a reaction carried out as described above except that the fumaric acid slurry was prepared by mixing fumaric acid with water at a 126 g scale.

**Table I**

| Component | Mole Percent |
|---|---|
| Phosphinicobis(succinic acid) salts (Structure II) | 48, 45 |
| Phosphinicosuccinic acid salts (Structure I) | 17, 24 |
| Phosphonosuccinic acid salts | 8, 4 |
| Phosphinicosuccinic acid oligomer salts (Structure III) | 27, 27 |
| Hypophosphite, phosphite, and phosphate salts | <1, <1 |

### Example II

A 2.5:1 molar ratio of fumaric to hypophosphite was used in this Example. The reaction conditions were as described in Example 1. The product, including salts of hypophosphite/fumarate adducts described in Table II below, displays the following molar distribution of components as determined by phosphorous NMR analysis.

**Table II**

| Component | Mole Percent |
|---|---|
| Phosphinicobis(succinic acid) salts (Structure II) | 49 |
| Phosphinicosuccinic acid salts (Structure I) | 7 |
| Phosphonosuccinic acid salts | 3 |
| Phosphinicosuccinic acid oligomer salts (Structure III) | 38 |
| Hypophosphite, phosphite, and phosphate salts | <1 |

### Example III

This is a comparative example, which used maleic acid instead of fumaric acid at the same 2.5:1 molar ratio as Example 2. It demonstrates that the results obtained with fumaric acid are unanticipated, The first dataset represents results obtained in the lab using the general procedure above, and the second dataset represents a plant run using the same mole ratio maleic to fumaric.

The general reaction conditions described in Example 1 were repeated except that maleic acid was substituted for fumaric acid at the same molar concentration. The product, comprised of salts of hypophosphite/maleate adducts described in Table III below, displayed the following molar distribution of components determined by phosphorous NMR analysis.

**Table III**

| Component | Mole Percent |
|---|---|
| Phosphinicobis(succinic acid) salts (Structure II) | 22, 17 |
| Phosphinicosuccinic acid salts (Structure II) | 24, 22 |
| Phosphonosuccinic acid salts | 2, 12 |
| Phosphinicosuccinic acid oligomer salts (Structure III) | 43, 35 |
| Hypophosphite, phosphite, and phosphate salts | 5, 8 |

### Example IV

This example used a low 1.75:1 ratio of fumaric to hypophosphite. It did not yield >30% bis product and had a higher level of undesirable inorganic phosphorous. The reaction conditions are as described in Example 1, except that a larger amount of hypophosphite was employed so that the molar ratio of fumaric acid to hypophosphitc was 1.75:1. The product, comprised of salts of hypophosphite/fumarate adducts described in Table IV below, displayed the following molar distribution of components determined by phosphorous NMR analysis.

**Table IV**

| Component | Mole Percent |
|---|---|
| Phosphinicobis(succinic acid) salts (Structure II) | 30 |
| Phosphinicosuccinic acid salts (Structure I) | 35 |
| Phosphonosuccinic acid salts | 8 |
| Phosphinicosuccinic acid oligomer salts (Structure III) | 22 |
| Hypophosphite, phosphite, and phosphate salts | 6 |

### Example V

In this Example, a 2.1:1 molar ratio of substantially neutralized sodium fumarate slurry was used to demonstrate that the process works over a wide pH range by use of a salt fumaric acid. In this case, about 80% of the fumaric acid carboxylic acids were converted to the sodium carboxylate form, and the pH increased from about 1 to about 6.

Sodium hypophosphite monohydrate (13.0 grams) was added to 61.0 of a 49.1 wt% slurry of fumaric acid in water contained in a 250 ml resin flask equipped with a mechanical stirrer, condenser, nitrogen inlet, and heater. Aqueous 50% sodium hydroxide (32.1 grams) was then added under mixing and cooling. A solution of ammonium persulfate (3.6 grams dissolved in 6.0 grams water) was then added over a period of 5 hours while the reaction temperature was maintained at 60°C under a nitrogen blanket. The reaction solution was heated 1 to 5 hours further, and 6 grams water was added. The product, comprised of salts of hypophosphite/fumarate adducts described in Table V below, displayed the following molar distribution of components, as determined by phosphorous NMR analysis.

**Table V**

| Component | Mole Percent |
|---|---|
| Phosphinicobis(succinic acid) salts (Structure II) | 46 |
| Phosphinicosuccinic acid salts (Structure I) | 18 |
| Phosphonosuccinic acid salts | 8 |
| Phosphinicosuccinic acid oligomer salts (Structure III) | 26 |
| Hypophosphite, phosphite, and phosphate salts | <1 |

### Example VI

Step 1: Monosodium Phosphinocobis(dimethyl succinate): A 2.1:1 molar ratio of dimethyl maleate to hypophosphite was used in this Example. Sodium hypophosphite, 7.325 parts, was added to 6.25 parts water and 12.5 parts ethanol in a resin flask equipped with a magnetic stirrer, condenser, nitrogen inlet, heater, and a dropping funnel. This solution was heated to 80°C. A solution consisting of 20.75 parts dimethyl maleate, 0.86 parts benzoyl peroxide (70% solution), and 25 parts ethanol was then added dropwise to the reaction flask over a period of 4.75 hours. The reaction mixture was heated for an additional 15 minutes then cooled. The solvent was removed by rotary evaporation under reduced pressure.

Step 2: Sodium Phosphinocobis(succinate): 34.5 parts of monosodium phosphinocobis(dimethyl succinate) was added to 20 parts water and 55.4 parts of a 50% aqueous solution of sodium hydroxide in a reaction flask equipped with a magnetic stirrer, condenser, and heater. The reaction was heated to 100°C and maintained at that temperature for 2 hours. The product was diluted with 20 parts water and then neutralized with 40.4 parts hydrochloric acid to about pH 6.

The product, comprised of salts of hypophosphite/maleate adducts described in Table VI below, displayed the following molar distribution of components determined by phosphorous NMR analysis.

**Table VI**

| Component | Mole Percent |
|---|---|
| Phosphinicobis(succinic acid) salts (Structure II) | 88 |
| Phosphinicosuccinic acid salts (Structure I) | 9 |
| Phosphonosuccinic acid salts | 1 |
| Hypophosphite, phosphite, and phosphate salts | 2 |

### Example VII

Maleic anhydride (306.25 g, 3.125 moles) briquettes were crushed and added to a 1.5 liter reaction flask along with about 516.9 grams of water. The suspension was stirred for about 15 minutes to allow the maleic anhydride to dissolve and hydrolyze. This initial step raised the temperature of the solution from 21°C to 32°C. After stirring for an additional 45 minutes, the mild exotherm began to subside and sodium hypophosphite monohydrate (132.5 g, 1.25 moles) was added. A second mild exotherm occured as sodium hypophosphite was dissolved. Nitrogen purging was begun and the reaction mixture was heated to 60°C over 30 minutes. Ammonium persulfate solution was added (99.75 g of 37.22% aqueous solution) over about 4 hours. Temperature was controlled at 60°C to 61°C. When addition of the catalyst was complete, heating at 60°C was continued for between about 2 and 2.5 hours.

Heating was continued and incrementally increased to 80°C until the oxidant was consumed or destroyed, as indicated by a negative starch-iodide test. The clear, yellow solution was highly acidic (pH 1). The concentration of the final product before neutralization was 44.77% (assuming complete incorporation of maleic acid and sodium hypophosphite). Analysis of the reaction mixture was done using ³¹P and ¹³C NMR, showing the absence of maleic acid in the final product mixture.

A sample (100.0 g of the 44.77% solution described above) was neutralized to pH 7.0 by drop-wise addition of 50% sodium hydroxide. Solution temperature was observed and maintained at 60°C or less with ice-water bath cooling. The concentration of the resultant solution was 30.79% (calculated based on dilution).

### Example VIII

A fresh solution of calcium sulfate test water having 5,000 ppm Ca (as CaCO3) at a pH of 8.8 to 9.0 was prepared and used for each test. Test water was analyzed for Ca concentration by atomic absorption prior to heating. The Parr Reactor (available from Parr Instrument Company in Moline, IL) test protocol included a Teflon-line autoclave, designed with a sampling line and stirrer. The reactor was charged with 250 ml of freshly prepared test water and was sealed and pressurized to 40 psig with nitrogen gas. For low temperature testing, the autoclave was heated to 60°C with mild stirring of the test water. Upon reaching test temperature, stirring was stopped and the test water was held at 60°C for 24 hours. Samples of the test water were then removed via the sample line, which was submerged about one-third from the liquid/gas interface, and immediately fixed for Ca analysis by atomic absorption (Table VII). The autoclave was then heated to 100°C with no additional stirring for high temperature testing. The temperature was held at 100°C for another 24 hours. After purging the sample line, samples of the high temperature test water were collected and immediately fixed for atomic absorption Ca analysis (Table VIII).

**Table VII**

| **Treatment** | **Actives dosage ppm** | **Final Ca ppm** | **% Ca decrease** | **% CaSO₄ scale inhibition** |
|---|---|---|---|---|
| Blank | 0 | 2,175 | 56.50 | 0 |
| Polymaleic acid | 31 | 4,915 | 1.70 | 96.99 |
| PSO | 31 | 4,820 | 3.60 | 93.63 |
| PSO | 3.10 | 4,295 | 14.10 | 75.04 |
| 50/50blend PSO Polymaleic acid | 3.10 | 4,890 | 2.20 | 96.11 |
| 50/50 copolymer Acrylate Maleic acid | 31 | 4,460 | 10.80 | 80.88 |

**Table VIII**

| **Treatment** | **Actives dosage ppm** | **Final Ca ppm** | **% Ca decrease** | **% CaSO₄ scale inhibition** |
|---|---|---|---|---|
| Blank | 0 | 1,885 | 62.90 | 0 |
| Polymaleic acid | 31 | 2,095 | 58.10 | 7.63 |
| PSO | 31 | 2,830 | 43.40 | 31.00 |
| PSO | 3.10 | 2,094 | 58.12 | 7.60 |
| 50/50 blend PSO Polymaleic acid | 3.10 | 1,990 | 60.20 | 4.29 |
| 50/50 copolymer Acrylate Maleic acid | 31 | 1,855 | 62.30 | 0.95 |

### Example IX

Artificial seawater ("ASW") was prepared according to the following recipe (*See* Cavanaugh, G.M. ed (1975) Formulae and Methods of the Murine Biological Laboratory Chemical Room, Marine Biological Laboratory, Woods Hole, MA): 423 mM NaCl; 9 mM KCl; 9.27 mM CaCl₂-2H₂O (or CaCl₂ anhydrous); 22.94 mM MgCl₂-6H₂O (or MgCl₂ anhydrous); 25.5 mM MgSO₄·7H₂O (or MgSO₄ anhydrous); and 2.14 mM NaHCO₃.

Two pH levels of 5.6 (Table IX) and 6.8 (Table X) were tested with various levels of added scale inhibitor and various ASW concentration factors ("CF"). CFs were achieved by boiling and evaporating the water samples under atmospheric pressure at 100°C until concentrated to the respective CF. CNTs (controls) received no scale-inhibiting treatment. PMAs received treatment with a composition including about 3 weight percent maleic acid, about 7.5 weight percent (3-methylphenyl)methyl butanedioic acid, about 3 weight percent (4-methylphenyl)methyl butanedioic acid, and about 39.5 weight percent poly(maleic acid). PSOs received treatment with a composition including about 0.225 weight percent sodium bromide, about 3.5 weight percent ammonium sodium sulfate, and about 40 weight percent maleic anhydride reaction products (including phosphinosuccinic acid oligomers) with sodium hypophosphite and ammonium persulfate sodium salt. FTU turbidity ("FTU") was measured using a Hach DR-2000 spectrophotometer after achieving the desired CF. The "ppms" in the tables below indicate concentration of PMA or PSO scale-inhibitor in the sample.

**Table IX**

| **Sample** | **CF @3ppm** | **FTU** | **CF @6ppm** | **FTU** | **CF @12 ppm** | **FTU** | **CF @24 ppm** | **FTU** |
|---|---|---|---|---|---|---|---|---|
| CNT-1 | 1.00 | 0 | 1.00 | 0 | 1.00 | 0 | 1.00 | 0 |
| CNT-2 | 1.37 | 3 | 1.33 | 0 | 1.35 | 2 | 1.31 | 0 |
| CNT-3 | 1.53 | 7 | 1.56 | 5 | 1.59 | 5 | 1.61 | 7 |
| CNT-4 | 1.99 | 7 | 2.11 | 12 | 2.04 | 12 | 2.02 | 12 |
| CNT-5 | 2.78 | 8 | 6.65 | 25 | 6.65 | 25 | 2.49 | 16 |
| PMA-1 | 1.00 | 0 | 1.00 | 0 | 1.00 | 0 | 1.00 | 0 |
| PMA-2 | 1.40 | 3 | 1.33 | 0 | 1.33 | 0 | 1.48 | 0 |
| PMA-3 | 1.54 | 6 | 1.50 | 1 | 1.72 | 7 | 1.68 | 0 |
| PMA-4 | 2.18 | 6 | 2.12 | 12 | 2.32 | 14 | 1.95 | 1 |
| PMA-5 | 3.34 | 10 | 3.08 | 18 | 3.16 | 19 | 2.73 | 3 |
| PSO-1 | 1.00 | 0 | 1.00 | 0 | 1.00 | 0 | 1.00 | 0 |
| PSO-2 | 1.34 | 2 | 1.28 | 0 | 1.28 | 0 | 1.31 | 0 |
| PSO-3 | 1.47 | 4 | 1.60 | 2 | 1.66 | 0 | 1.60 | 0 |
| PSO-4 | 1.79 | 4 | 1.91 | 7 | 2.24 | 4 | 1.98 | 0 |
| PSO-5 | 2.38 | 9 | 2.71 | 12 | 2.75 | 5 | 2.40 | 3 |

**Table X**

| **Sample** | **CF @3ppm** | **FTU** | **CF @6ppm** | **FTU** | **CF @12 ppm** | **FTU** | **CF @24 ppm** | **FTU** |
|---|---|---|---|---|---|---|---|---|
| CNT-6 | 1.00 | 0 | 1.00 | 0 | 1.00 | 0 | 1.00 | 0 |
| CNT-7 | 1.26 | 68 | 1.26 | 54 | 1.30 | 56 | 1.25 | 68 |
| CNT-8 | 1.53 | 85 | 1.62 | 78 | 1.55 | 59 | 1.54 | 89 |
| CNT-9 | 1.94 | 115 | 2.18 | 102 | 2.11 | 87 | 1.90 | 108 |
| CNT-10 | 2.44 | 148 | 2.82 | 126 | 3.12 | 144 | 2.92 | 172 |
| PMA-6 | 1.00 | 0 | 1.00 | 0 | 1.00 | 0 | 1.00 | 0 |
| PMA-7 | 1.28 | 68 | 1.27 | 64 | 1.30 | 58 | 1.26 | 23 |
| PMA-8 | 1.60 | 89 | 1.55 | 76 | 1.56 | 86 | 1.55 | 53 |
| PMA-9 | 2.14 | 120 | 2.00 | 99 | 2.20 | 101 | 1.94 | 65 |
| PMA-10 | 2.78 | 160 | 2.57 | 123 | 3.30 | 150 | 2.91 | 97 |
| PSO-6 | 1.00 | 0 | 1.00 | 0 | 1.00 | 0 | 1.00 | 0 |
| PSO-7 | 1.24 | 61 | 1.22 | 68 | 1.26 | 56 | 1.23 | 62 |
| PSO-8 | 1.50 | 78 | 1.52 | 81 | 1.48 | 62 | 1.47 | 87 |
| PSO-9 | 1.86 | 102 | 1.94 | 104 | 1.94 | 88 | 1.76 | 107 |
| PSO-10 | 2.25 | 124 | 2.39 | 137 | 2.65 | 125 | 3.00 | 176 |

### Example X

Seawater (from the North Sea) was used for testing in this Example. Three pH levels of 5.5 (Table XI), 6 (Table XII), and 7 (Table XIII) were tested with various levels of added scale inhibitor and various seawater concentration factors ("CF"). Samples were treated as in Example IX.

**Table XI**

| **Sample** | **CF @12ppm** | **FTU** | **CF @24 ppm** | **FTU** |
|---|---|---|---|---|
| CNT-1 | 1.00 | 2 | 1.00 | 2 |
| CNT-2 | 1.32 | 2 | 1.24 | 2 |
| CNT-3 | 1.59 | 3 | 1.55 | 3 |
| CNT-4 | 2.01 | 7 | 2.03 | 4 |
| CNT-5 | 2.74 | 9 | 2.80 | 6 |
| PMA-1 | 1.00 | 2 | 1.00 | 2 |
| PMA-2 | 1.34 | 2 | 1.21 | 2 |
| PMA-3 | 1.65 | 3 | 1.69 | 2 |
| PMA-4 | 2.28 | 7 | 1.95 | 3 |
| PMA-5 | 2.84 | 8 | 2.79 | 4 |
| PSO-1 | 1.00 | 2 | 1.00 | 2 |
| PSO-2 | 1.29 | 2 | 1.19 | 2 |
| PSO-3 | 1.55 | 3 | 1.55 | 2 |
| PSO-4 | 1.88 | 6 | 2.02 | 2 |
| PSO-5 | 2.58 | 9 | 2.47 | 2 |

**Table XII**

| **Sample** | **CF @12ppm** | **FTU** | **CF @24ppm** | **FTU** |
|---|---|---|---|---|
| CNT-6 | 1.00 | 1 | 1.00 | 1 |
| CNT-7 | 1.26 | 1 | 1.31 | 1 |
| CNT-8 | 1.50 | 3 | 1.60 | 2 |
| CNT-9 | 2.34 | 2 | 1.96 | 3 |
| CNT-10 | 3.43 | 6 | 3.27 | 14 |
| PMA-6 | 1.00 | 1 | 1.00 | 1 |
| PMA-7 | 1.34 | 1 | 1.42 | 2 |
| PMA-8 | 1.49 | 2 | 1.64 | 2 |
| PMA-9 | 2.33 | 2 | 2.01 | 3 |
| PMA-10 | 2.82 | 3 | 3.00 | 8 |
| PSO-6 | 1.00 | 1 | 1.00 | 1 |
| PSO-7 | 1.28 | 1 | 1.31 | 1 |
| PSO-8 | 1.48 | 1 | 1.51 | 1 |
| PSO-9 | 2.02 | 2 | 1.82 | 2 |
| PSO-10 | 2.72 | 5 | 2.97 | 8 |

**Table XIII**

| **Sample** | **CF @12ppm** | **FTU** | **CF @24ppm** | **FTU** |
|---|---|---|---|---|
| CNT-11 | 1.00 | 1 | 1.00 | 1 |
| CNT-12 | 1.24 | 32 | 1.27 | 15 |
| CNT-13 | 1.69 | 53 | 1.55 | 17 |
| CNT-14 | 2.13 | 70 | 2.08 | 26 |
| CNT-15 | 3.57 | 122 | 3.39 | 51 |
| PMA-11 | 1.00 | 1 | 1.00 | 1 |
| PMA-12 | 1.22 | 1 | 1.25 | 8 |
| PMA-13 | 1.61 | 19 | 1.53 | 21 |
| PMA-14 | 2.02 | 28 | 2.05 | 33 |
| PMA-15 | 3.24 | 55 | 3.30 | 64 |
| PSO-11 | 1.00 | 1 | 1.00 | 1 |
| PSO-12 | 1.22 | 31 | 1.21 | 4 |
| PSO-13 | 1.53 | 54 | 1.46 | 38 |
| PSO-14 | 1.92 | 76 | 1.85 | 53 |
| PSO-15 | 2.97 | 118 | 2.28 | 69 |

It should be understood that various changes and modifications to the presently preferred embodiments described herein will be apparent to those skilled in the art.

## Claims

1. A method of inhibiting formation and deposition of scale in a desalination process, the method comprising adding to a saline aqueous source from 1 ppm to 30 ppm of a scale-inhibiting composition including an oligomeric phosphinosuccinic acid,
wherein the scale-inhibiting composition includes polymaleic acid added as part of said composition, separately, sequentially, or simultaneously.

2. The method of Claim 1, wherein the desalination process is a thermal desalination process or a membrane desalination process.

3. The method of Claim 1, wherein the scale includes one or more constituents selected from the group consisting of: calcium, phosphate, magnesium, sulfate, bicarbonate, silicate, carbonate, iron, and combinations thereof.

4. The method of Claim 1, including inhibiting formation and deposition of scale selected from the group consisting of: calcium sulfate, calcium carbonate, magnesium hydroxide, magnesium carbonate, and combinations thereof.

5. The method of Claim 1, wherein the saline aqueous source includes seawater and including adding the scale-inhibiting composition to a seawater input stream of the desalination process and/or to a recirculation brine of the desalination process.

6. The method of Claim 1, wherein the desalination process produces a water temperature from 80°C to 160°C during the process.

7. The method of Claim 1, wherein the desalination process produces a water temperature higher than 160°C,

8. The method of Claim 1, wherein the scale-inhibiting composition includes a phosphinosuccinic acid oligomer having formula [Rₓ-(POOM)-R1_{y}], wherein R and R1 independently are H, [CH(COOM)], or [CH(COOM)-CH(COOM)], X and Y are either O or a small whole number, the sum of X and Y being greater than 2, and M is chosen independently at each occurrence from the group consisting of: H, Na, K, NH₄, or combinations thereof.

9. The method of Claim 1, wherein the scale-inhibiting composition includes less than 22 mole percent monosodium phosphinicobis-succinic acid; less than 26 mole percent monosodium phosphinico-succinic acid; less than 12 mole percent sodium phosphosuccinic acid; less than 5 mole percent sodium phosphate; less than 6 mole percent sodium hypophosphite; and greater than 32 mole percent phosphinosuccinic acid oligomer of Claim 8.

10. The method of Claim 1, wherein the scale-inhibiting composition includes 40 weight percent maleic anhydride reaction products.

11. The method of Claim 1, wherein the scale-inhibiting composition includes mono, bis, and oligomeric phosphinosuccinic acid adducts.

12. The method of Claim 11, wherein the scale-inhibiting composition includes 20 mole percent to 85 mole percent bis phosphinosuccinic acid adduct.

13. The method of Claim 11, wherein the scale-inhibiting composition includes 36 mole percent to 49 mole percent bis phosphinosuccinic acid adducts and 26 mole percent to 35 mole percent oligomeric phosphinosuccinic acid adducts.

14. The method of Claim 1, including one or more corrosion inhibitors, one or more other scale inhibitors, one or more fluorescent tracers, one or more water treatment polymers, and combinations thereof either as part of the scale-inhibiting composition or added separately, sequentially, or simultaneously with the scale- inhibiting composition.

15. The method of Claim 1, including monitoring the concentration of the scale-inhibiting composition in the desalination system by using an inert fluorescent tracer.

16. The method of Claim 1, including adding a pH-controlling chemical to the scale-inhibiting composition.

## Patentansprüche

1. Verfahren zum Hemmen der Bildung und Ablagerung von Kesselstein in einem Entsalzungsprozess, das Verfahren umfassend das Hinzufügen einer kesselsteinhemmenden Zusammensetzung, die eine oligomere Phosphinosuccinsäure beinhaltet, zu einer salzwasserhaltigen wässrigen Quelle von 1 ppm bis 30 ppm, wobei die kesselsteinhemmende Zusammensetzung Polymaleinsäure beinhaltet, die als Teil der Zusammensetzung separat, nacheinander oder gleichzeitig hinzugefügt wird.

2. Verfahren nach Anspruch 1, wobei der Entsalzungsprozess ein thermischer Entsalzungsprozess oder ein Membran-Entsalzungsprozess ist.

3. Verfahren nach Anspruch 1, wobei der Kesselstein einen oder mehrere Bestandteile beinhaltet, ausgewählt aus der Gruppe bestehend aus: Calcium, Phosphat, Magnesium, Sulfat, Bicarbonat, Silikat, Carbonat, Eisen und Kombinationen davon.

4. Verfahren nach Anspruch 1, einschließlich des Hemmens der Bildung und Ablagerung von Kesselstein, ausgewählt aus der Gruppe bestehend aus: Calciumsulfat, Calciumcarbonat, Magnesiumhydroxid, Magnesiumcarbonat und Kombinationen davon.

5. Verfahren nach Anspruch 1, wobei die salzhaltige wässrige Quelle Meerwasser beinhaltet und das Zugeben der kesselsteinhemmenden Zusammensetzung zu einem Meerwasser-Eingangsstrom des Entsalzungsprozesses und/oder zu einer Rezirkulationssole des Entsalzungsprozesses beinhaltet.

6. Verfahren nach Anspruch 1, wobei der Entsalzungsprozess während des Prozesses eine Wassertemperatur von 80 °C bis 160 °C erzeugt.

7. Verfahren nach Anspruch 1, wobei der Entsalzungsprozess eine Wassertemperatur von mehr als 160 °C erzeugt.

8. Verfahren nach Anspruch 1, wobei die kesselsteinhemmende Zusammensetzung ein Phosphinosuccinsäureoligomer mit der Formel [Rₓ-(POOM)-R1_{y}] beinhaltet, wobei R und R1 unabhängig voneinander H, [CH(COOM)] oder [CH(COOM)-CH(COOM)] sind, X und Y entweder O oder eine kleine ganze Zahl sind, wobei die Summe von X und Y größer als 2 ist, und M unabhängig voneinander bei jedem Auftreten aus der Gruppe ausgewählt wird, bestehend aus: H, Na, K, NH₄ oder Kombinationen davon.

9. Verfahren nach Anspruch 1, wobei die kesselsteinhemmende Zusammensetzung weniger als 22 Mol-% Mononatriumphosphinicobis-Bernsteinsäure; weniger als 26 Mol-% Mononatriumphosphinicobis-Bernsteinsäure; weniger als 12 Mol-% Natriumphosphinbernsteinsäure; weniger als 5 Mol-% Natriumphosphat; weniger als 6 Mol-% Natriumhypophosphit; und mehr als 32 Mol-% Phosphinosuccinsäure-Oligomer nach Anspruch 8 beinhaltet.

10. Verfahren nach Anspruch 1, wobei die kesselsteinhemmende Zusammensetzung 40 Gew.-% Maleinsäureanhydrid-Reaktionsprodukte beinhaltet.

11. Verfahren nach Anspruch 1, wobei die kesselsteinhemmende Zusammensetzung Mono-, Bis- und oligomere Phosphinosuccinsäureaddukte beinhaltet.

12. Verfahren nach Anspruch 11, wobei die kesselsteinhemmende Zusammensetzung 20 Mol-% bis 85 Mol-% Bisphosphinosuccinsäureaddukt beinhaltet.

13. Verfahren nach Anspruch 11, wobei die kesselsteinhemmende Zusammensetzung 36 Mol-% bis 49 Mol-% Bisphosphinosuccinsäureaddukte und 26 Mol-% bis 35 Mol-% oligomere Phosphinosuccinsäureaddukte beinhaltet.

14. Verfahren nach Anspruch 1, einschließlich eines oder mehrerer Korrosionshemmer, eines oder mehrerer anderer Kesselsteinhemmer, eines oder mehrerer fluoreszierender Tracer, eines oder mehrerer Wasserbehandlungspolymere und Kombinationen derselben entweder als Teil der kesselsteinhemmenden Zusammensetzung oder separat, nacheinander oder gleichzeitig mit der kesselsteinhemmenden Zusammensetzung zugesetzt.

15. Verfahren nach Anspruch 1, einschließlich des Überwachens der Konzentration der kesselsteinhemmenden Zusammensetzung im Entsalzungssystem unter Verwendung eines inerten Fluoreszenztracers.

16. Verfahren nach Anspruch 1, einschließlich des Zugebens einer pH-kontrollierenden Chemikalie zu der kesselsteinhemmenden Zusammensetzung.

## Revendications

1. Procédé d'inhibition de la formation et du dépôt de tartre dans un procédé de désalinisation, le procédé consistant à ajouter à une source aqueuse saline une composition d'inhibition de tartre ayant une teneur comprise entre 1 ppm et 30 ppm et comprenant un acide phosphinosuccinique oligomère, dans lequel la composition d'inhibition de tartre comprend l'acide polymaléique ajouté en tant que partie de ladite composition, séparément, séquentiellement ou simultanément.

2. Procédé selon la revendication 1, dans lequel le procédé de désalinisation est un procédé de désalinisation thermique ou un procédé de désalinisation par membrane.

3. Procédé selon la revendication 1, dans lequel le tartre comprend un ou plusieurs constituant(s) choisi(s) dans le groupe comprenant : le calcium, le phosphate, le magnésium, le sulfate, le bicarbonate, le silicate, le carbonate, le fer et des combinaisons de ceux-ci.

4. Procédé selon la revendication 1, comprenant l'inhibition de la formation et du dépôt de tartre choisi dans le groupe comprenant : le sulfate de calcium, le carbonate de calcium, l'hydroxyde de magnésium, le carbonate de magnésium et des combinaisons de ceux-ci.

5. Procédé selon la revendication 1, dans lequel la source aqueuse saline comprend de l'eau de mer et comprenant l'ajout de la composition d'inhibition de tartre à un courant d'entrée d'eau de mer du procédé de désalinisation et/ou à une saumure recyclée du procédé de désalinisation.

6. Procédé selon la revendication 1, dans lequel le procédé de désalinisation produit une température de l'eau de 80°C à 160°C au cours du procédé.

7. Procédé selon la revendication 1, dans lequel le procédé de désalinisation produit une température de l'eau supérieure à 160°C.

8. Procédé selon la revendication 1, dans lequel la composition d'inhibition de tartre comprend un oligomère d'acide phosphinosuccinique ayant la formule [Rₓ-(POOM)-R1_{y}], dans laquelle R et R1 représentent indépendamment H, [CH(COOM)], ou [CH(COOM)-CH(COOM)], X et Y sont soit O, soit un petit nombre entier, la somme de X et Y étant supérieure à 2, et M est choisi indépendamment à chaque occurrence dans le groupe constitué de : H, Na, K, NH₄, ou des combinaisons de ceux-ci.

9. Procédé selon la revendication 1, dans lequel la composition d'inhibition de tartre comprend moins de 22 moles pour cent d'acide phosphinicobis-succinique monosodique ; moins de 26 moles pour cent d'acide phosphinico-succinique monosodique ; moins de 12 moles pour cent d'acide phosphosuccinique de sodium ; moins de 5 moles pour cent de phosphate de sodium ; moins de 6 moles pour cent d'hypophosphite de sodium ; et plus de 32 moles pour cent d'oligomère d'acide phosphinosuccinique selon la revendication 8.

10. Procédé selon la revendication 1, dans lequel la composition d'inhibition de tartre comprend 40 % de produits de réaction d'anhydride maléique.

11. Procédé selon la revendication 1, dans lequel la composition d'inhibition de tartre comprend des adduits d'acide phosphinosuccinique mono, bis et oligomères.

12. Procédé selon la revendication 11, dans lequel la composition d'inhibition de tartre comprend 20 à 85 moles pour cent d'adduit d'acide phosphinosuccinique bis.

13. Procédé selon la revendication 11, dans lequel la composition d'inhibition de tartre comprend 36 à 49 moles pour cent d'adduits d'acide phosphinosuccinique bis et 26 à 35 moles pour cent d'adduits d'acide phosphinosuccinique oligomères.

14. Procédé selon la revendication 1, comprenant un ou plusieurs inhibiteur(s) de corrosion, un ou plusieurs autre(s) inhibiteurs de tartre, un ou plusieurs traceur(s) fluorescent(s), un ou plusieurs polymère(s) de traitement de l'eau, et des combinaisons de ceux-ci faisant partie de la composition d'inhibition de tartre ou ajoutés séparément, séquentiellement ou simultanément avec la composition d'inhibition de tartre.

15. Procédé selon la revendication 1, comprenant la surveillance de la concentration de la composition d'inhibition de tartre dans le système de désalinisation en utilisant un traceur fluorescent inerte.

16. Procédé selon la revendication 1, consistant à ajouter un produit chimique de régulation du pH à la composition d'inhibition de tartre.
